# EUROPÄISCHE PATENTSCHRIFT

(11) **EP 1 931 894 B1**
(45) Veröffentlichungstag und Bekanntmachung des Hinweises auf die Patenterteilung: **08.06.2011**
(21) Anmeldenummer: 06790250.2
(22) Anmeldetag: 29.09.2006
(51) Int. Cl.: F16H 48/22

(54) **DIFFERENTIALGETRIEBEEINHEIT FÜR KRAFTFAHRZEUGE MIT AKTIVER STEUERUNG DER ANTRIEBSKRAFTVERTEILUNG**
DIFFERENTIAL GEAR UNIT FOR MOTOR VEHICLES WITH ACTIVE CONTROL OF DRIVE FORCE DISTRIBUTION
UNITE ENGRENAGE DIFFERENTIEL POUR VEHICULES A MOTEUR A COMMANDE ACTIVE DE LA REPARTITION DE LA FORCE D'ENTRAINEMENT

(30) Priorität: 29.09.2005 AT 6602005 U
(43) Veröffentlichungstag der Anmeldung: 18.06.2008
(73) Patentinhaber: Magna Steyr Fahrzeugtechnik AG & Co. KG, 8041 Graz (AT)
(72) Erfinder: KASSLER, Helmut, A-8570 Voitsberg (AT)
(74) Vertreter: Harringer, Thomas
(86) Internationale Anmeldenummer: PCT/AT2006/000399
(87) Internationale Veröffentlichungsnummer: WO 2007/035977

(56) Entgegenhaltungen:
- EP-A1- 0 546 733
- EP-A1- 0 662 402
- DE-A1-102006 008 236
- GB-A- 2 213 443
- JP-A- 6 227 272
- US-A- 1 740 010

## Beschreibung

Die Erfindung betrifft eine Differentialgetriebeeinheit für Kraftfahrzeuge, bestehend aus einem Gehäuse und darin einem Differentialgetriebe, einem Überbeziehungsweise Untersetzungsgetriebe und zwei steuerbaren Reibungskupplungen, wobei das Differentialgetriebe aus einem angetriebenen Glied (beispielsweise einem Differentialkorb) und einem ersten und zweiten Abtriebsglied, beispielsweise den Achswellen, besteht, wobei das Über-beziehungsweise Untersetzungsgetriebe nach Maßgabe des Einrückgrades der Reibungskupplungen ein zusätzliches Drehmoment auf das erste beziehungsweise zweite Abtriebsglied übertragt.

Derartige Einheiten erlauben die aktive Steuerung der Antriebskraftverteilung zwischen den beiden Abtriebsgliedern. Diese sind entweder mit einer ersten und zweiten angetriebenen Achse eines Kraftfahrzeuges oder, vorzugsweise, mit den beiden Rädern einer Achse antriebsverbunden. Das Über- beziehungsweise Untersetzungsgetriebe bewirkt eine Übersetzung ins Schnelle oder ins Langsame; sodass über die gegensinnig steuerbaren Reibungskupplungen auf das jeweilige Abtriebsglied ein zusätzliches Antriebs- oder Bremsmoment ausgeübt werden kann, je nach Fahrsituation. In der Fachwelt wird das als "Torque Vectoring" bezeichnet.

Aus der US 5,370,588 ist eine Differentialgetriebeeinheit bekannt, bei der beiderseits je ein Über- beziehungsweise Untersetzungsgetriebe in hohlradloser Bauweise mit Doppelplaneten ausgeführt, und jeweils mit einer Seite einer Kupplung drehfest verbunden ist. Bei dieser Bauart sind die Reibungskupplungen schwer zugänglich und deren Aktuatorik ist schwierig unterzubringen. Das Über- beziehungsweise Untersetzungsgetriebe ist ein festachsiges Getriebe, dessen Ausgangs- und Eingangsglieder koaxial sind, es kann auch als Koaxialgetriebe bezeichnet werden.

Aus der US 4,973,296 ist eine Differentialgetriebeeinheit bekannt, bei der das Über- beziehungsweise Untersetzungsgetriebe eine parallellachsige Zahnradstufe ist, deren zweite Achse nicht mit der Drehachse der Abtriebsglieder zusammenfällt. Diese Bauweise nimmt als Achsdifferential in Fahrzeuglängsrichtung viel Bauraum in Anspruch, nicht zuletzt, weil die Über- beziehungsweise Untersetzung nahe 1:1 1 ist und beide Zahnräder daher ungefähr gleich groß sind.
Letztlich ist aus der EP 0 662 402 eine gattungsgemäße Differentialgetriebeeinheit bekannt.

Es ist somit Aufgabe der Erfindung, eine gattungsgemäße Differentialgetriebeeinheit so weiterzubilden, dass sie bei geringstem Bauraum und Verschleiß sehr hohe Kräfte aufnehmen kann. Erfindungsgemäß wird das dadurch erreicht, dass das Über- beziehungsweise Untersetzungsgetriebe ein mit dem angetriebenen Glied des Differentialgetriebes drehfest verbundenes erstes Glied und ein über je eine Reibungskupplung mit dem jeweiligen Abtriebsglied des Differentialgetriebes drehfest verbundenes zweites Glied aufweist, und dass ein drittes Glied des Über- beziehungsweise Untersetzungsgetriebes als Zahnring ausgebildet ist, der in exzentrischen Lagern geführt ist und der eine Aussenverzahnung und eine Innenverzahnung aufweist. Der Zahnring ist bezüglich der Achse der Abtriebsglieder im Gehäuse exzentrisch gelagert.

So ist beiderseits ein klein bauendes einfaches Koaxialgetriebe als Über- beziehungsweise Untersetzungsgetriebe in unmittelbarer Nähe der Kupplung vorgesehen, was insgesamt günstige Kraftverläufe ergibt und Bauraum erspart. Der Zahnring umgibt das Sonnenrad exzentrisch, in der Art eines Ölförderringes bei einem Gleitlager historischer Bauart, wobei er diese Wirkung auch tatsächlich ausüben kann. Diese besondere Getriebeform ist zwar an sich bekannt, siehe etwa die Patente US 1,619,127 oder US 773,227, nicht aber in Verbindung mit Reibungskupplungen zur Steuerung der Drehmomentverteilung und mit der der Erfindung zugrunde liegenden Aufgabenstellung.

Diese Getriebeform erlaubt es, die für diesen Zweck günstigen Übersetzungen auf sehr kleinem Raum zu verwirklichen, aus geometrischen Gründen und weil Innenverzahnungen sehr hohe Überdeckungsgrade haben (es sind viele Zähne gleichzeitig im Eingriff, auf die sich die zu übertragenden Kräfte verteilen). Der hohe Überdeckungsgrad erlaubt auch eine besonders schmale und damit raumsparende Ausführung der verzahnten Glieder. Die möglichen Übersetzungen erlauben eine optimale Auslegung der Reibungskupplung für die entsprechenden Drehzahldifferenzen, was zu deren Schonung beitragt und im Verband mit guter Schmierung/Kühlung diese für dauernden Schlupfbetrieb besonders geeignet macht.

Das Über- beziehungsweise Untersetzungsgetriebe ist ein Koaxialgetriebe, dessen erstes Glied entweder ein mit der Aussenverzahnung des dritten Gliedes kämmendes Hohlrad (Anspruch 2) oder ein mit der Innenverzahnung des dritten Gliedes kämmendes Sonnenrad (Anspruch 3) ist. In beiden Fällen sind hohe Überdeckungsgrade des Zahneingriffes und Über- beziehungsweise Untersetzungsverhältnisse nahe 1:1 gut erzielbar.

In einer bevorzugten Ausführungsform ist der die Aussenlamellen tragende Primärteil der Reibungskupplungen mit dem zweiten Glied des Über- beziehungsweise Untersetzungsgetriebes und der die Innenlamellen tragende Sekundärteil mit dem jeweiligen Abtriebsglied antriebsverbunden (Anspruch 4). Dabei kann das zweite Glied das Sonennrad oder auch das Hohlrad sein.

Wenn die ganze Differentialgetriebeeinheit in Querrichtung unsymmetrisch sein kann oder muss, kann weitere Raumökonomie erzielt werden, wenn beide Reibungskupplungen auf derselben Seite des Differentialgetriebes angeordnet sind (Anspruch 4), vorzugsweise sind dann deren Primärteile baulich zu einer Glocke vereint (Anspruch 5).

In Weiterbildung der Erfindung ist auf der dem Über- beziehungsweise Untersetzungsgetriebe abgewandten Seite des Differentialgetriebes eine Kupplung zur wahlweisen Verbindung eines Abtriebsgliedes des Differentialgetriebes mit dessen angetriebenem Glied angeordnet (Anspruch 6). So kann eine Differentialsperre geschaffen werden, die vorzugsweise auch eine steuerbare Reibungskupplung ist (Anspruch 7).

Für allradgetriebene Kraftfahrzeuge, in dessen Antriebsstrang das Antriebsmoment für eine zweite angetriebene Achse vom Achsdifferential der ersten angetriebenen Achse abgezweigt ist, ist das angetriebene Glied des Achsdifferentials mit einem Abtriebsrad für eine weitere angetriebene Achse antriebsverbunden (Anspruch 8). Bei der besagten Disposition des Antriebsstranges ist es von besonderem Vorteil, das Abtriebsrad zwischen dem Differential und dem Über- beziehungsweise Untersetzungsgetriebe anzuordnen. So kommt die zur zweiten angetriebenen Achse führende Gelenkwelle ungefähr in der Längsmitte des Kraftfahrzeuges zu liegen.

In Verfeinerung dieser Weiterbildung kann auch das der zweiten angetriebenen Achse zugeteilte Moment mittels einer weiteren (dritten) Reibungskupplung gesteuert sein (Anspruch 9). Vorzugsweise ist dann eine Kupplungshälfte der weiteren Kupplung mit dem ersten Glied des Über- beziehungsweise Untersetzungsgetriebes baulich vereint (Anspruch 10).

Im Folgenden wird die erfindungsgemäße Differentialgetriebeeinheit anhand von schematischen Abbildungen diverser Ausführungsformen beschrieben und erläutert. Es stellen dar:
- Fig. 1: Eine erste Ausführungsform,
- Fig. 2: eine zweite Ausführungsform,
- Fig. 3: eine dritte Ausführungsform,
- Fig. 4: eine vierte Ausführungsform.

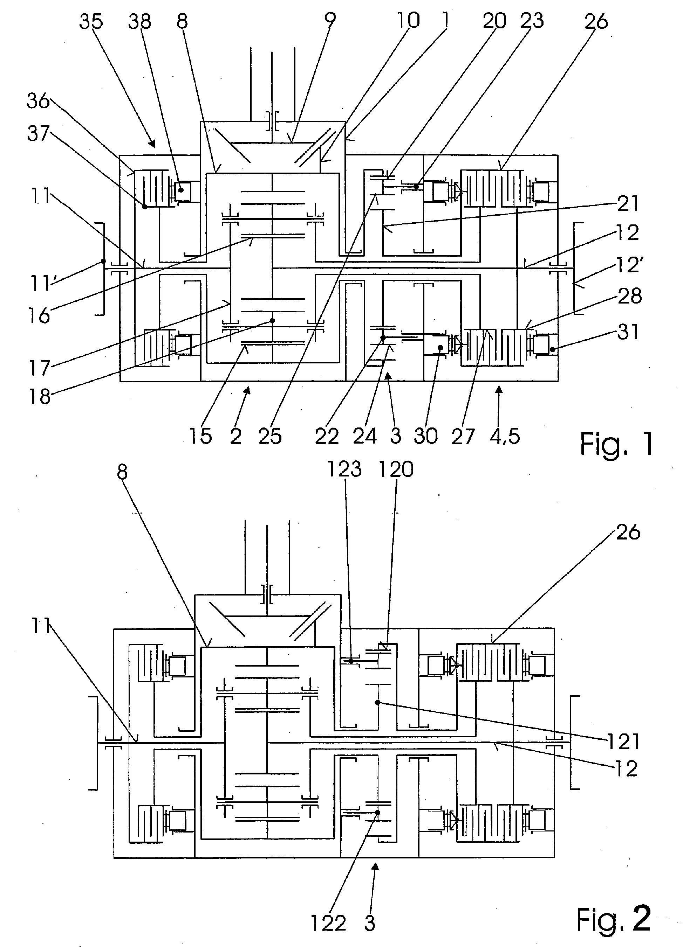

In **Fig. 1** ist das Gehäuse nur angedeutet und mit 1 bezeichnet. Es enthält ein Differentialgetriebe 2, ein Über- beziehungsweise Untersetzungsgetriebe 3 und zwei steuerbare Reibungskupplungen 4, 5. Das von einer nicht dargestellten Motor- Getriebeeinheit bereitgestellte Antriebsmoment wird einem Differentialkorb 8, dem angetriebenen Glied des Differentialgetriebes 2, über einen Triebling 9 und ein Tellerrad 10 zugeführt. Bei Queranordnung des Motorgetriebeblockes tritt anstelle des Tellerrades 10 ein Stirnzahnrad. Das Differentialgetriebe verteilt die Antriebskraft auf zwei koaxiale Abtriebsglieder 11, 12, die mittels Flanschen 11', 12' mit entweder zu den Achsen eines Kraftfahrzeuges führenden Gelenkwellen, oder zu den Rädern einer Achse führenden Achswellen (allesamt nicht dargestellt) verbunden sind.

Das Differentialgetriebe 2 kann im Rahmen der Erfindung von beliebiger Bauart sein, also sowohl ein Kegelraddifferential als auch ein Planetendifferential. Ist es von letzterem Typ, besteht es aus einem mit dem Differentialkorb 8 fest verbundenen Hohlrad 15, einem mit dem zweiten Abtriebsglied 12 drehfest verbundenen Sonnenrad 16 und einem mit den ersten Abtriebsglied 11 drehfest verbundenen Planetenträger, der mit Planetenrädern 18 versehen ist. Um eine symmetrische Momentenverteilung zu erreichen, sind die Planetenräder in bekannter Weise so angeordnet, dass sie paarweise miteinander und je eines mit dem Hohlrad 15 und eines mit dem Sonnenrad 16 kämmen.

Das Über- beziehungsweise Untersetzungsgetriebe 3 ist ein Koaxialgetriebe, insbesondere ein Planetengetriebe besonderer Bauart. Es besteht aus einem Hohlrad 20 (in Fig. 1 erstes Glied), einem Sonnenrad 21 (in Fig 1 zweites Glied) und einem Zahnring 22 (in Fig. 1 und 2 drittes Glied). Der Zahnring 22 ist in gehäusefesten bezüglich der Abtriebsglieder 11,12 exzentrischen Lagern 23 geführt und ist ein das Sonnenrad 21 umgebender Ring mit einer Außenverzahnung 24 und einer Innenverzahnung 25. Die Aussenverzahnung 24 kämmt mit dem Hohlrad 20, die Innenverzahnung 25 mit dem Sonnenrad 21. Das Hohlrad 20 ist mit dem Differentialkorb 8 drehfest verbunden und das Sonnenrad 21 mit den Reibungskupplungen 4, 5. Es ist bemerkenswert, dass nur ein Über- beziehungsweise Untersetzungsgetriebe 3 vorhanden ist.

Die steuerbaren Reibungskupplungen 4, 5 schließen an der dem Differentialgetriebe 2 abgewandten Seite des Über- beziehungsweise Untersetzungsgetriebes 3 an. Beide Reibungskupplungen 4, 5 haben einen gemeinsamen Primärteil 26, er bildet eine Glocke und ist in Fig. 1 mit dem Sonnenrad 21 drehfest verbunden. Von den beiden Sekundärteilen 27, 28, den getrennten Sekundärteilen der beiden Reibungskupplungen 4, 5, ist der erste über den Planetenträger 17 des Differentialgetriebes 2 hindurch mit dessen erstem Abtriebsglied 11 antriebsverbunden. Der Sekundärteil 28 der zweiten Kupplung 5 ist direkt mit dem zweiten Abtriebsglied 12 des Differentialgetriebes 2 verbunden; direkt, weil das zweite Abtriebsglied auf derselben Seite wie die Reibungskupplungen 4,5 ist. Für die beiden Reibungskupplungen 4, 5 sind getrennte Aktuatoren 30, 31 vorgesehen. Sie erlauben eine voneinander unabhängige, auch gegensinnige, Ansteuerung der beiden Reibungskupplungen 4, 5.

Auf der anderen Seite des Differentialgetriebes 2 ist eine dritte Reibungskupplung 35 als steuerbare Differentialsperre vorgesehen. Sie besteht aus einem mit dem ersten Abtriebsglied 11 drehfest verbundenen Außenteil 36 und einem mit dem Differentialkorb 8 drehfest verbundenen Innenteil 37. Zur Ansteuerung ist ein Aktuator 38 vorgesehen.

**Fig. 2** unterscheidet sich von Fig. 1 nur dadurch, dass das Über- beziehungsweise Untersetzungsgetriebe 3 anders eingebunden ist. Hier ist das mit dem Differentialkorb 8 verbundene erste Glied das Sonnenrad 121 und das mit dem gemeinsamen Primärteil 26 der Kupplungen 4, 5 drehfest verbundene Sekundärteil das Hohlrad 120. Alles andere ist gleich, weshalb die übrigen Teile auch die Bezugszeichen der Fig. 1 tragen.

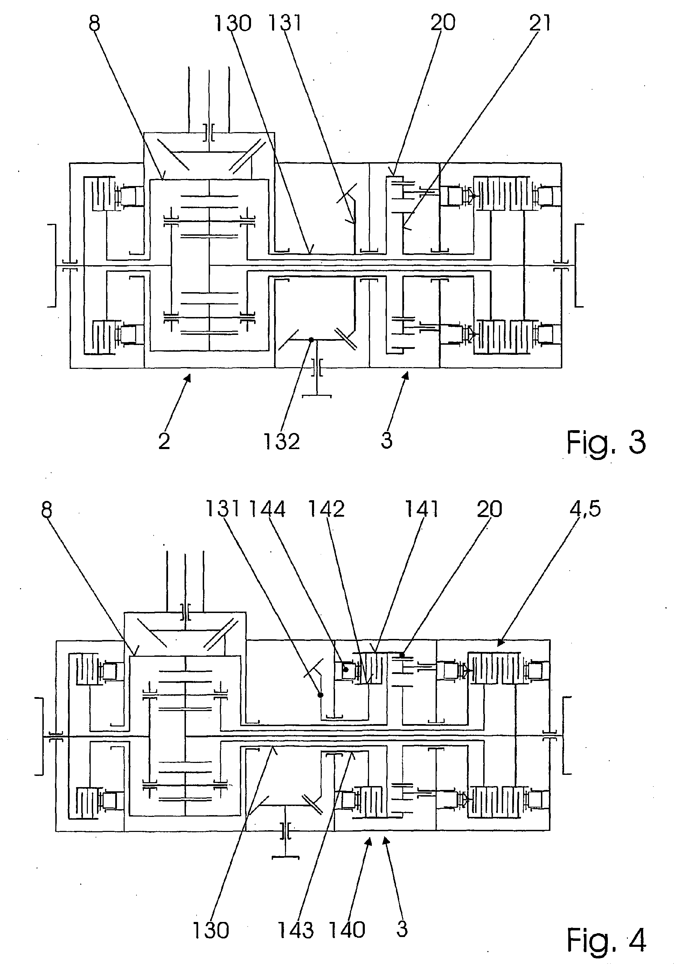

In **Fig. 3** ist zur Ausführungsform der Fig. 1 ein Abtrieb für eine nicht dargestellte weitere angetriebene Achse hinzugefügt. Als Verbindung zwischen dem Differentialkorb 8 und dem Hohlrad 20 ist eine Hohlwelle 130 eingefügt, auf der ein Abtriebsrad 131 sitzt, welches hier über einen Winkeltrieb 132 Antriebskraft für die weitere Achse abgibt. Dank der Hohlwelle 130 ist das Abtriebsrad 131 zwischen dem Differentialgetriebe 2 und dem Über- beziehungsweise Untersetzungsgetriebe 3 angeordnet.

In **Fig. 4** ist zur Ausführungsform der Fig. 3 noch eine weitere Reibungskupplung 140 eingefügt. Sie hat den Zweck, auch das der weiteren angetriebenen Achse zuführbare Drehmoment zu verstellen. Dazu ist die Hohlwelle 30 vom Differentialkorb 8 bis zum Kupplungsaußenteil 141 geführt, welcher mit dem Hohlrad 20 des Über- beziehungsweise Untersetzungsgetriebes 3 fest verbunden oder wie hier einstückig ist. Der Innenteil 142 der Kupplung 140 ist über eine die Hohlwelle 130 umgebende Hohlwelle 143 mit dem Abtriebsrad 131 verbunden. Der Aktuator für diese weitere Reibungskupplung 140 ist mit 144 bezeichnet.

Bezüglich der konstruktiven Gestaltung der einzelnen Komponenten der beschriebenen Ausführungsformen (insbesondere des Zahnringes 22) wird auf die etwas frühere österreichische Gebrauchsmusteranmeldung Nr. GM 112/2005 bezug genommen.

Die Übersetzung des Über- beziehungsweise Untersetzungsgetriebes und deren Auslegung kann in einem weiten Bereich den in Frage kommenden fahrdynamischen Anforderungen eines Kraftfahrzeuges angepasst werden. Eine Übersetzung bzw Untersetzung der dazu erforderlichen Größenordnung ist dank dessen besonderer Gestaltung bei optimaler Auslegung der Verzahnung bei minimalem Raumbedarf konstruktiv möglich geworden. Am Rande ist zu vermerken, dass die erfindungsgemäße Differentialgetriebeeinheit auch ohne Antrieb durch entsprechende Ansteuerung der Reibungskupplungen Drehmomente zwischen den beiden Achswellen übertragen kann.

## Patentansprüche

1. Differentialgetriebeeinheit für Kraftfahrzeuge, bestehend aus einem Gehäuse (1) und darin einem Differentialgetriebe (2), einem Überbeziehungsweise Untersetzungsgetriebe und zwei steuerbaren Reibungskupplungen (4,5), wobei das Differentialgetriebe (2) aus einem angetriebenen Glied (8) und einem ersten und einem zweiten Abtriebsglied (11,12) besteht, und wobei das Über- beziehungsweise Untersetzungsgetriebe nach Maßgabe des Einrückgrades der Reibungskupplungen (4,5) ein zusätzliches Drehmoment auf das erste beziehungsweise zweite Abtriebsglied (11,12) übertragt, wobei
a) das Über- beziehungsweise Untersetzungsgetriebe (3) ein mit dem angetriebenen Glied (8) des Differentialgetriebes (2) drehfest verbundenes erstes Glied (20; 121) und ein über je eine Reibungskupplung (4,5) mit dem jeweiligen Abtriebsglied (11,12) des Differentialgetriebes (2) drehfest verbundenes zweites Glied (21; 120) aufweist, **dadurch gekennzeichnet,**
b) **dass** ein drittes Glied (22;122) des Über- beziehungsweise Untersetzungsgetriebes (3) als Zahnring ausgebildet ist, der in exzentrischen Lagern (23;123) geführt ist und der eine Aussenverzahnung (24) und eine Innenverzahnung (25) aufweist.

2. Differentialgetriebeeinheit nach Anspruch 1, **dadurch gekennzeichnet, dass** das Über- beziehungsweise Untersetzungsgetriebe (3) ein Koaxialgetriebe ist, wobei das erste Glied (20) ein mit der Aussenverzahnung (24) des dritten Gliedes (22) kämmendes Hohlrad und das zweite Glied (21) ein mit der Innenverzahnung (25) dritten Gliedes (22) kämmendes Sonnenrad ist. (Fig.1)

3. Differentialgetriebeeinheit nach Anspruch 1, **dadurch gekennzeichnet, dass** das Über- beziehungsweise Untersetzungsgetriebe ein Koaxialgetriebe ist, wobei das erste Glied (121) ein mit der Innenverzahnung (25) dritten Gliedes (122) kämmendes Sonnenrad und das zweite Glied (120) ein mit der Aussenverzahnung (24) des dritten Gliedes (22) kämmendes Hohlrad ist. (Fig.2)

4. Differentialgetriebeeinheit nach Anspruch 1, wobei die Reibungskupplungen (4,5) jeweils aus einem Primärteil (26) und einem Sekundärteil (27,28) bestehen, **dadurch gekennzeichnet, dass** der Primärteil (26) mit dem zweiten Glied (21;120) des Über- beziehungsweise Untersetzungsgetriebes (3) und der Sekundärteil (27,28) mit dem jeweiligen Abtriebsglied (11,12) antriebsverbunden ist.

5. Differentialgetriebeeinheit nach Anspruch 4, **dadurch gekennzeichnet, dass** beide Reibungskupplungen (4,5) auf derselben Seite des Differentialgetriebes angeordnet sind und deren Primärteile (26) zu einer Glocke vereint sind.

6. Differentialgetriebeeinheit nach Anspruch 5, **dadurch gekennzeichnet, dass** auf der dem Über- beziehungsweise Untersetzungsgetriebe (3) abgewandten Seite des Differentialgetriebes (2) eine Kupplung (35) zur wahlweisen Verbindung eines Abtriebsgliedes (11) des Differentialgetriebes (2) mit dessen angetriebenem Glied (8) angeordnet ist.

7. Differentialgetriebeeinheit nach Anspruch 6, **dadurch gekennzeichnet, dass** die Kupplung (35) eine weitere steuerbare Reibungskupplung ist.

8. Differentialgetriebeeinheit nach Anspruch 1, **dadurch gekennzeichnet, dass** das Differentialgetriebe (2) ein Achsdifferential ist und dass dessen angetriebenes Glied (8) mit einem Abtriebsrad (131) für eine weitere angetriebene Achse antriebsverbunden ist. (Fig. 3)

9. Differentialgetriebeeinheit nach Anspruch 8, **dadurch gekennzeichnet, dass** zwischen dem angetriebenen Glied (8) und dem Abtriebsrad (131) für eine weitere angetriebene Achse eine weitere Reibungskupplung (140) angeordnet ist. (Fig. 4)

10. Differentialgetriebeeinheit nach Anspruch 9, **dadurch gekennzeichnet, dass** eine Kupplungshälfte (141) der weiteren Kupplung (140) mit dem ersten Glied (20;121) des Über- beziehungsweise Untersetzungsgetriebe (3) baulich vereint ist. (Fig. 4)

## Claims

1. Differential gearing unit for motor vehicles, composed of a housing (1) and, therein, a differential gearing (2), a step-up or step-down gearing and two controllable friction clutches (4,5), with the differential gearing (2) being composed of a driven element (8) and a first and a second drive output element (11,12), and with the step-up or step-down gearing transmitting an additional torque to the first or second drive output element (11,12) as a function of the degree of engagement of the friction clutches (4,5), with
a) the step-up or step-down gearing (3) having a first element (20; 121), which is rotationally fixedly connected to the driven element (8) of the differential gearing (2), and a second element (21; 120) which is rotationally fixedly connected by means of in each case one friction clutch (4,5) to the respective drive output element (11,12) of the differential gearing (2), **characterized**
b) **in that** a third element (22;122) of the step-up or step-down gearing (3) is embodied as a toothed ring which is guided in eccentric bearings (23;123) and which has an external toothing (24) and an internal toothing (25).

2. Differential gearing unit according to Claim 1, **characterized in that** the step-up or step-down gearing (3) is a coaxial gearing, with the first element (20) being a ring gear which meshes with the external toothing (24) of the third element (22) and the second element (21) being a sun gear which meshes with the internal toothing (25) of the third element (22). (Figure 1)

3. Differential gearing unit according to Claim 1, **characterized in that** the step-up or step-down gearing is a coaxial gearing, with the first element (121) being a sun gear which meshes with the internal toothing (25) of the third element (122) and the second element (120) being a ring gear which meshes with the external toothing (24) of the third element (22). (Figure 2)

4. Differential gearing unit according to Claim 1, with the friction clutches (4,5) being composed in each case of a primary part (26) and a secondary part (27,28), **characterized in that** the primary part (26) is drive-connected to the second element (21;120) of the step-up or step-down gearing (3) and the secondary part (27,28) is drive-connected to the respective drive output element (11,12).

5. Differential gearing unit according to Claim 4, **characterized in that** the two friction clutches (4,5) are arranged on the same side of the differential gearing and their primary parts (26) are combined to form a bell.

6. Differential gearing unit according to Claim 5, **characterized in that** a clutch (35) for selectively connecting a drive output element (11) of the differential gearing (2) to the driven element (8) thereof is arranged on that side of the differential gearing (2) which faces away from the step-up or step-down gearing (3).

7. Differential gearing unit according to Claim 6, **characterized in that** the clutch (35) is a further controllable friction clutch.

8. Differential gearing unit according to Claim 1, **characterized in that** the differential gearing (2) is an axle differential and **in that** the driven element (8) thereof is drive-connected to a drive output wheel (131) for a further driven axle. (Figure 3)

9. Differential gearing unit according to Claim 8, **characterized in that** a further friction clutch (140) is arranged between the driven element (8) and the drive output wheel (131) for a further driven axle. (Figure 4)

10. Differential gearing unit according to Claim 9, **characterized in that** one clutch half (141) of the further clutch (140) is structurally combined with the first element (20;121) of the step-up or step-down gearing (3). (Figure 4)

## Revendications

1. Unité d'engrenage différentiel pour véhicules automobiles, constituée d'un boîtier (1) et, à l'intérieur de celui-ci, d'un engrenage différentiel (2), d'un multiplicateur ou démultiplicateur et de deux embrayages à friction commandables (4, 5), l'engrenage différentiel (2) se composant d'un organe entraîné (8) et d'un premier et d'un deuxième organe de sortie (11, 12), le multiplicateur ou démultiplicateur transférant en fonction du degré d'embrayage des embrayages à friction (4, 5) un couple supplémentaire au premier ou au deuxième organe de sortie (11, 12),
a) le multiplicateur ou démultiplicateur (3) présentant un premier organe (20 ; 121) connecté de manière solidaire en rotation à l'organe entraîné (8) de l'engrenage différentiel (2) et un deuxième organe (21 ; 120) connecté de manière solidaire en rotation par le biais de chaque embrayage à friction (4, 5) à l'organe de sortie respectif (11, 12) de l'engrenage différentiel (2),
**caractérisée en ce que**
b) un troisième organe (22 ; 122) du multiplicateur ou démultiplicateur (3) est réalisé sous forme de couronne dentée qui est guidée dans des paliers excentriques (23 ; 123) et qui présente une denture extérieure (24) et une denture intérieure (25).

2. Unité d'engrenage différentiel selon la revendication 1, **caractérisée en ce que** le multiplicateur ou démultiplicateur (3) est un engrenage coaxial, le premier organe (20) étant une couronne s'engrenant avec la denture extérieure (24) du troisième organe (22) et le deuxième organe (21) étant une roue solaire s'engrenant avec la denture intérieure (25) du troisième organe (22) (figure 1).

3. Unité d'engrenage différentiel selon la revendication 1, **caractérisée en ce que** le multiplicateur ou démultiplicateur est un engrenage coaxial, le premier organe (121) étant une roue solaire s'engrenant avec la denture intérieure (25) du troisième organe (122) et le deuxième organe (120) étant une couronne s'engrenant avec la denture extérieure (24) du troisième organe (22) (figure 2).

4. Unité d'engrenage différentiel selon la revendication 1, dans laquelle les embrayages à friction (4, 5) se composent chacun d'une partie primaire (26) et d'une partie secondaire (27, 28), **caractérisée en ce que** la partie primaire (26) est connectée par entraînement au deuxième organe (21 ; 120) du multiplicateur ou démultiplicateur (3) et la partie secondaire (27, 28) est connectée par entraînement à l'organe de sortie respectif (11, 12).

5. Unité d'engrenage différentiel selon la revendication 4, **caractérisée en ce que** les deux embrayages à friction (4, 5) sont disposés du même côté de l'engrenage différentiel et leurs parties primaires (26) sont assemblées pour former une cloche.

6. Unité d'engrenage différentiel selon la revendication 5, **caractérisée en ce que** du côté de l'engrenage différentiel (2) opposé au multiplicateur ou démultiplicateur (3) est disposé un embrayage (35) pour la connexion sélective d'un organe de sortie (11) de l'engrenage différentiel (2) à son organe entraîné (8).

7. Unité d'engrenage différentiel selon la revendication 6, **caractérisée en ce que** l'embrayage (35) est un embrayage à friction commandable supplémentaire.

8. Unité d'engrenage différentiel selon la revendication 1, **caractérisée en ce que** l'engrenage différentiel (2) est un différentiel d'essieu et **en ce que** son organe entraîné (8) est connecté par entraînement à une roue de sortie (131) pour un essieu entraîné supplémentaire (figure 3).

9. Unité d'engrenage différentiel selon la revendication 8, **caractérisée en ce que** l'on dispose, entre l'organe entraîné (8) et la roue de sortie (131) pour un essieu entraîné supplémentaire, un embrayage à friction supplémentaire (140) (figure 4).

10. Unité d'engrenage différentiel selon la revendication 9, **caractérisée en ce qu'**une moitié d'embrayage (141) de l'embrayage supplémentaire (140) est assemblée de manière structurelle au premier organe (20; 121) du multiplicateur ou démultiplicateur (3) (figure 4).
